# EUROPEAN PATENT SPECIFICATION

(11) **EP 2 184 479 B1**
(45) Date of publication and mention of the grant of the patent: **14.10.2015**
(21) Application number: 08792736.4
(22) Date of filing: 26.08.2008
(51) Int. Cl.: F02G 1/053, F01B 9/02, F02B 75/32, F16C 9/04, F16C 23/04

(54) **PISTON ENGINE AND STIRLING ENGINE**
KOLBENMOTOR UND STIRLINGMOTOR
MOTEUR À PISTON ET MOTEUR STIRLING

(30) Priority: 27.08.2007 JP 2007220141
(43) Date of publication of application: 12.05.2010
(73) Proprietor: TOYOTA JIDOSHA KABUSHIKI KAISHA, Toyota-shi, Aichi-ken, 471-8571 (JP)
(72) Inventor: KATAYAMA, Masaaki, Toyota-shi, Aichi-ken, 471-8571 (JP); YAGUCHI, Hiroshi, Toyota-shi, Aichi-ken, 471-8571 (JP); SAWADA, Daisaku, Toyota-shi, Aichi-ken, 471-8571 (JP)
(74) Representative: TBK
(86) International application number: PCT/JP2008/065190
(87) International publication number: WO 2009/028498

(56) References cited:
- EP-A2- 1 529 992
- EP-A2- 1 734 247
- JP-A- 03 153 912
- JP-A- 61 040 451
- JP-A- 61 040 451
- JP-A- 2005 106 009
- JP-A- 2006 348 838
- JP-U- 03 035 319

## Description

### TECHNICAL FIELD

The present invention relates to a piston engine in which a piston reciprocates in a cylinder without using a piston ring and lubricating oil.

### BACKGROUND ART

In recent years, attention is being paid to a stirling engine having excellent theoretical thermal efficiency to recover exhaust heat of an internal combustion engine mounted on a vehicle such as a car, bus, track, or the like and factory exhaust heat. Patent document 1 discloses a stirling engine in which a piston is supported by an approximate linear mechanism and a gas bearing is interposed between the piston and a cylinder.

Patent document 1: Japanese Patent Application Laid-open No. 2005-106009

### DISCLOSURE OF INVENTION

### PROBLEM TO BE SOLVED BY THE INVENTION

In the stirling engine disclosed in the patent document 1, however, due to tolerance or the like of an approximate linear mechanism and an apparatus, a deviation may occur between the center axis of a piston in a direction parallel to the rotation axis of a crankshaft and the center axis of a cylinder. In the case of a structure where a gas bearing is interposed between the piston and the cylinder, different from a structure in which lubricant oil is interposed between the piston and the cylinder, it is a precondition that the piston and the cylinder do not come into contact with each other. Since the load bearing capability of a gas bearing is low, preferably, the piston reciprocates so that the center axis of the piston and that of the cylinder coincide with each other.

Consequently, in a structure in which a gas bearing is interposed between a piston and a cylinder, like the technique disclosed in the patent document 1, the locus of the piston is made almost straight by the approximate linear mechanism. However, due to variations, tolerance, and the like in manufacture, a deviation may occur between the locus of an ideal straight line of the piston reciprocating in the cylinder and that of the piston supported by the approximate linear mechanism. As a result, there is the possibility that a bias occurs in clearance between the piston and the cylinder, so that the load bearing capability of the gas bearing interposing between the piston and the cylinder cannot be effectively used.

The present invention is achieved in consideration of the above and an object of the invention is to suppress bias in clearance between a piston and a cylinder in the case where a deviation occurs between the center axis of the piston in a direction parallel to the rotation axis of a crankshaft and the center axis of the cylinder.

### MEANS FOR SOLVING PROBLEM

In order to achieve the object, a piston engine according to the present invention includes a piston that reciprocates in a cylinder; and a crankshaft that converts reciprocating motion of the piston to rotational motion, wherein even in a state where a coupling member coupled to the piston and provided between the piston and the crankshaft tilts toward a direction parallel to a rotation axis of the crankshaft from a center axis of the cylinder, the coupling member, the piston, and an object to be coupled on a side of the crankshaft are coupled so that the piston can reciprocate in the cylinder.

With the configuration, in the case where a deviation occurs between the center axis of a piston in a direction parallel to the rotation axis of the crankshaft and the center axis of the cylinder, the piston reciprocates in a state where the coupling member tilts toward a direction parallel to the rotation axis of the crankshaft. As a result, the cause of the deviation between the center axis of the piston and the center axis of the cylinder is absorbed by tilting of the coupling member toward the direction parallel to the rotation axis of the crankshaft. Therefore, bias in the clearance between the piston and the cylinder can be suppressed.

As a desirable mode of the present invention, in the piston engine, the part coupled to the object to be coupled on the side of the crankshaft of the coupling member is preferably supported by the approximate linear mechanism. With the configuration, a deviation between the locus of an object to be coupled on the side of the crankshaft of the coupling member supported by the approximate linear mechanism and an actual locus of the piston in the cylinder is absorbed in a state where the coupling member tilts. As a result, bias in the clearance between the piston and the cylinder can be suppressed.

As a desired mode of the present invention, in the piston engine, it is preferred that a first joint mechanism and a second joint mechanism are provided at ends of the coupling member, the piston and the coupling member to be coupled to the piston are coupled via the first joint mechanism, and the coupling member and the object to be coupled on the side of the crankshaft are coupled via the second joint mechanism.

In order to achieve the object, a piston engine according to the present invention includes a piston that reciprocates in a cylinder; a crankshaft that converts reciprocating motion of the piston to rotational motion; a coupling member in which a first end thereof is coupled to the piston and a second end thereof is coupled to an object to be coupled on the side of the crankshaft; a first joint mechanism that couples the piston and the first end of the coupling member, and permits at least movement about an axis parallel to a rotation axis of the crankshaft and movement about an axis orthogonal to a rotation axis of the crankshaft and a center axis of the cylinder; and a second joint mechanism that couples the second end of the coupling member and an object to be coupled on the side of the crankshaft, and permits at least movement about the axis parallel to the rotation axis of the crankshaft and movement about the axis orthogonal to the rotation axis of the crankshaft and the center axis of the cylinder.

With the configuration, in the case where a deviation occurs between the center axis of a piston in a direction parallel to the rotation axis of the crankshaft and the center axis of the cylinder, the first joint mechanisms and the second joint mechanisms provided at both ends of the coupling member make the coupling member tilt in a direction parallel to the rotation axis of the crankshaft. As a result, the deviation between the center axis of the cylinder and the object to be coupled of the coupling member on the side of the crankshaft is permitted, so that bias in the clearance between the piston and the cylinder can be suppressed.

As a desired mode of the present invention, in the piston engine, it is preferred that each of the first joint mechanism and the second joint mechanism is a spherical sliding bearing including an inner ring having a spherical surface as a sliding plane, and an outer ring that is in contact with the sliding plane and rotatably supporting the inner ring.

As a desired mode of the present invention, in the piston engine, it is preferred that the object to be coupled on the side of the crankshaft is a connecting rod coupled to the crankshaft.

As a desired mode of the present invention, in the piston engine, the coupling part between the coupling member and the connecting rod is preferably supported by the approximate linear mechanism. With the configuration, a deviation between the locus of the connecting rod as an object to be coupled on the side of the crankshaft of the coupling member supported by the approximate linear mechanism and an actual locus of the piston in the cylinder is absorbed in a state where the coupling member tilts. As a result, bias in the clearance between the piston and the cylinder can be suppressed.

As a desired mode of the present invention, in the piston engine, the piston is preferably supported in the cylinder by the gas interposing between the piston and the cylinder.

As a desired mode of the present invention, it is preferred that the piston engine further includes a rotation suppressing means that suppresses at least one of rotation about a center axis of the cylinder between the piston and the coupling member, and rotation about a center axis of the cylinder between the connecting rod and the coupling member.

As a desired mode of the present invention, in the piston engine, it is preferred that the rotation suppressing means is a buffer member that buffers an impact at a time when the coupling member comes into contact with the object to be coupled.

In order to achieve the object, a stirling engine according to the present invention includes a heat exchanger configured to include a heater that heats a working fluid, a regenerator connected to the heater and through which the working fluid passes, and a cooler connected to the regenerator and that cools the working fluid; a cylinder into which the working fluid passed through the heat exchanger flows and from which the working fluid flows out; a piston that reciprocates in the cylinder and in which an accumulation chamber is formed; an air supply port provided on a side part of the piston to make gas in the accumulation chamber flow between the piston and the cylinder; a crankshaft that converts reciprocating motion of the piston to rotational motion; a connecting rod that transmits the reciprocating motion of the piston to the crankshaft; a coupling member in which a first end thereof is coupled to the piston and a second end thereof is coupled to the connecting rod; an approximate linear mechanism that supports a coupling part between the coupling member and the connecting rod; a first joint mechanism that couples the piston and the first end of the coupling member, and permits at least movement about an axis parallel to a rotation axis of the crankshaft and movement about an axis orthogonal to a rotation axis of the crankshaft and a center axis of the cylinder; and a second joint mechanism that couples the second end of the coupling member and an object to be coupled on the side of the crankshaft, and permits at least movement about the axis parallel to the rotation axis of the crankshaft and movement about the axis orthogonal to the rotation axis of the crankshaft and the center axis of the cylinder.

With the configuration, in the case where a deviation occurs between the center axis of the piston in the direction parallel to the rotation axis of the crankshaft and the rotation axis of the cylinder, the first joint mechanisms and the second joint mechanisms provided at both ends of the coupling member make the coupling member tilt toward the direction parallel to the rotation axis of the crankshaft. As a result, a deviation between the center axis of the cylinder and the center of the connecting rod is permitted, so that a bias in the clearance between the piston and the cylinder can be suppressed.

As a desired mode of the present invention, in the stirling engine, it is preferred that each of the first joint mechanism and the second joint mechanism is a spherical sliding bearing including an inner ring having a spherical surface as a sliding plane, and an outer ring that is in contact with the sliding plane and rotatably supporting the inner ring.

As a desired mode of the present invention, it is preferred that the stirling engine further includes a rotation suppressing means that suppresses at least one of rotation about a center axis of the cylinder between the piston and the coupling member, and rotation about a center axis of the cylinder between the connecting rod and the coupling member.

As a desired mode of the present invention, in the stirling engine, it is preferred that the rotation suppressing means is a buffer member that buffers an impact at a time when the coupling member comes into contact with the object to be coupled.

### EFFECT OF THE INVENTION

According to the present invention, in the case where a deviation occurs between the center axis of the piston in the direction parallel to the rotation axis of the crankshaft and the center axis of the cylinder, a bias in the clearance between the piston and the cylinder can be suppressed.

### BRIEF DESCRIPTION OF DRAWINGS

[Fig. 1] Fig. 1 is a cross sectional diagram showing a stirling engine as a piston apparatus and an exhaust heat recovery apparatus according to an embodiment.
[Fig. 2] Fig. 2 is an explanatory diagram of a gas bearing supporting a piston.
[Fig. 3-1] Fig. 3-1 is an explanatory diagram showing an arrangement example of air supply openings in a high-temperature-side piston and a low-temperature-side piston provided for the stirling engine according to the embodiment.
[Fig. 3-2] Fig. 3-2 is an explanatory diagram showing an arrangement example of the air supply openings in the high-temperature-side piston and the low-temperature-side piston provided for the stirling engine according to the embodiment.
[Fig. 4] Fig. 4 is an explanatory diagram showing another example of a piston which can be applied to the stirling engine acceding to the embodiment.
[Fig. 5] Fig. 5 is an explanatory diagram showing a structure of supporting the piston of the stirling engine according to the embodiment.
[Fig. 6-1] Fig. 6-1 is an enlarged diagram showing a coupling structure of a piston according to the embodiment.
[Fig. 6-2] Fig. 6-2 is an enlarged diagram showing a coupling structure of a piston according to the embodiment.
[Fig. 6-3] Fig. 6-3 is an enlarged diagram showing a coupling structure of a piston according to the embodiment.
[Fig. 7] Fig. 7 is a cross sectional diagram showing the configuration of a joint as a component of the piston coupling structure according to the embodiment.
[Fig. 8] Fig. 8 is a schematic diagram showing coordinates for explaining movement of the joint illustrated in Fig. 7.
[Fig. 9] Fig. 9 is an explanatory diagram of an extension rod as a component of the piston coupling structure according to the embodiment.
[Fig. 10] Fig. 10 is a conceptual diagram for explaining that a deviation between the center axis of a connecting rod and that of a cylinder can be permitted by the piston coupling structure according to the embodiment.
[Fig. 11] Fig. 11 is a schematic diagram for explaining rotation of a piston about the center axis of the cylinder.
[Fig. 12] Fig. 12 is an enlarged view showing a piston coupling structure according to a modification of the embodiment.
[Fig. 13] Fig. 13 is an enlarged view showing the piston coupling structure according to the modification of the embodiment.
[Fig. 14] Fig. 14 is an enlarged view showing the piston coupling structure according to the modification of the embodiment.
[Fig. 15] Fig. 15 is a schematic diagram showing the piston coupling structure according to the modification of the embodiment.
[Fig. 16] Fig. 16 is a schematic diagram showing a configuration example of the case where the stirling engine according to the embodiment is used for recovering exhaust of an internal combustion engine.

### EXPLANATIONS OF LETTERS OR NUMERALS

- 1: stirling engine
- 2: heat exchanger
- 2C: cooler
- 2H: heater
- 2R: regenerator
- 4: crankcase
- 5: casing
- 10: crankshaft
- 11: pressurizing means
- 12: extension rod
- 12A: high-temperature-side extension rod
- 12B: low-temperature-side extension rod
- 12C: connecting-rod-side end
- 12P: piston-side end
- 12Tp: rotation suppression pin
- 12T: protruding portion
- 13, 13a: connecting rods
- 13A: high-temperature-side connecting rod
- 13B: low-temperature-side connecting rod
- 14: operating space
- 14A: high-temperature-side operating space
- 14B: low-temperature-side operating space
- 15: cylinder
- 15A: high-temperature-side cylinder
- 15B: low-temperature-side cylinder
- 16: pump for gas bearing
- 17: gas supply pipe
- 18: grasshopper mechanism
- 18A: first arm
- 18B: second arm
- 18C: third arm
- 20: piston
- 20A: high-temperature-side piston
- 20B: low-temperature-side piston
- 20t: top
- 20u: bottom
- 21: coupling part
- 22: accumulation chamber
- 22A: high-temperature-side accumulation chamber
- 22B: low-temperature-side accumulation chamber
- 23₁, 23₂: air supply ports
- 24, 24': sides
- 25P: piston-side mounting pin
- 25C: connecting-rod-side mounting pin
- 29: gas introduction passage
- 30: joint mechanism
- 30B: inner ring
- 30L: outer ring
- 30H: shaft hole
- 30P: piston-side joint mechanism
- 30C: crankshaft-side joint mechanism
- 32: buffer member
- 40: check valve
- 50: engine ECU
- 101: internal combustion engine
- 102: exhaust passage
- 103: heater case
- 104: internal combustion engine transmission
- 105: stirling engine transmission
- 105s: input shaft
- 106: clutch
- 107: output shaft
- 109: transmission output shaft
- 110: differential gear

### BEST MODE(S) FOR CARRYING OUT THE INVENTION

The present invention will be described in detail below with reference to the drawings. The invention, however, is not limited to best modes for carrying out the invention (hereinbelow, called embodiments). Components in the following embodiments include those which can be easily achieved by a person skilled in the art, and those which are substantially the same, that is, those in a scope of so-called equivalents. In the following, a stirring engine will be taken as an example of a piston engine. However, the piston engine is not limited to the stirling engine. Although an example of recovering exhaust heat of an internal combustion engine mounted on a vehicle or the like by using a stirling engine as the piston engine will be described, the object whose exhaust heat is to be recovered is not limited to the internal combustion engine. For example, the invention can be also applied to the case of recovering exhaust heat of a factory, a plant, or a power generating facility.

A piston engine according to the embodiment has a piston which reciprocates in a cylinder, and a crankshaft which converts reciprocating motion of the piston to rotational motion. In a state where a coupling member coupled to the piston and provided between the piston and crankshaft tilts toward a direction parallel to a rotation axis of the crankshaft from a center axis of the cylinder and in a state where the coupling member does not tilt, a clearance between the piston and the cylinder is held in a predetermined state toward the circumferential direction of the piston and the cylinder, and the piston can reciprocate in the cylinder. That is, even in a state where the coupling member tilts at least toward the direction parallel to the rotation axis of the crankshaft from the center axis of the cylinder, the piston can reciprocate in the cylinder in a state where the center axis of the piston and that of the cylinder coincide with each other. Even in a state where the coupling member tilts toward a direction other than the direction parallel to the rotation axis of the crankshaft from the center axis of the cylinder, the piston can reciprocate in the cylinder.

For example, first joint mechanisms and second joint mechanisms are provided at ends of the coupling member, the piston and the coupling member to be coupled to the piston are coupled via the first joint mechanism, and the coupling member and an object to be coupled on the crankshaft side are coupled via the second joint mechanism. Each of the first and second joint mechanisms uses, for example, a spherical sliding bearing permitting at least movement about an axis parallel to a rotation axis of the crankshaft and movement about an axis orthogonal to the rotation axis of the crankshaft and a center axis of the cylinder.

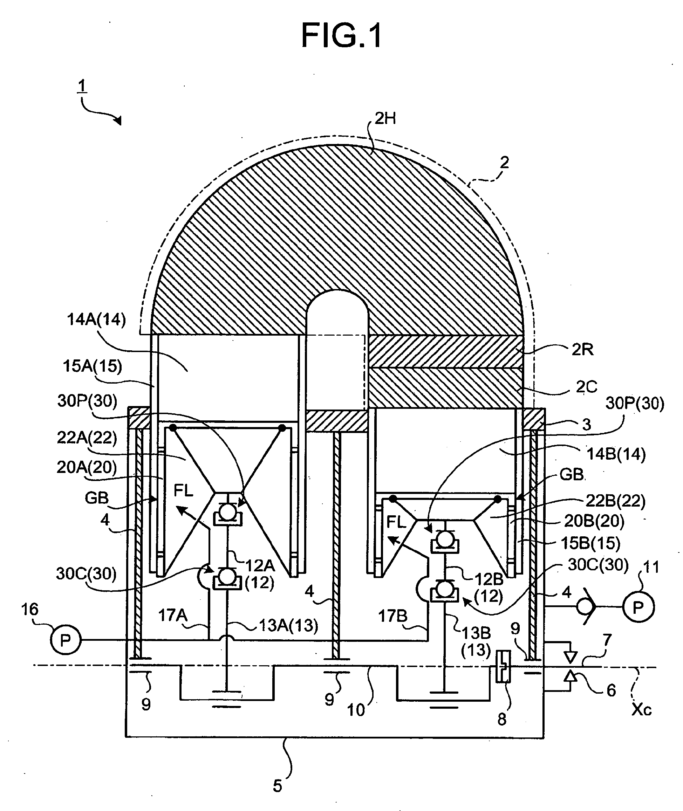

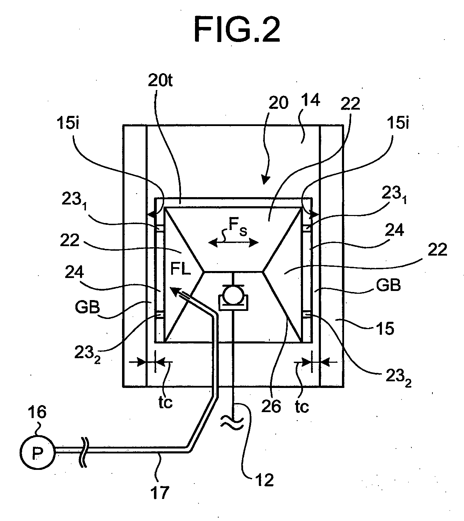

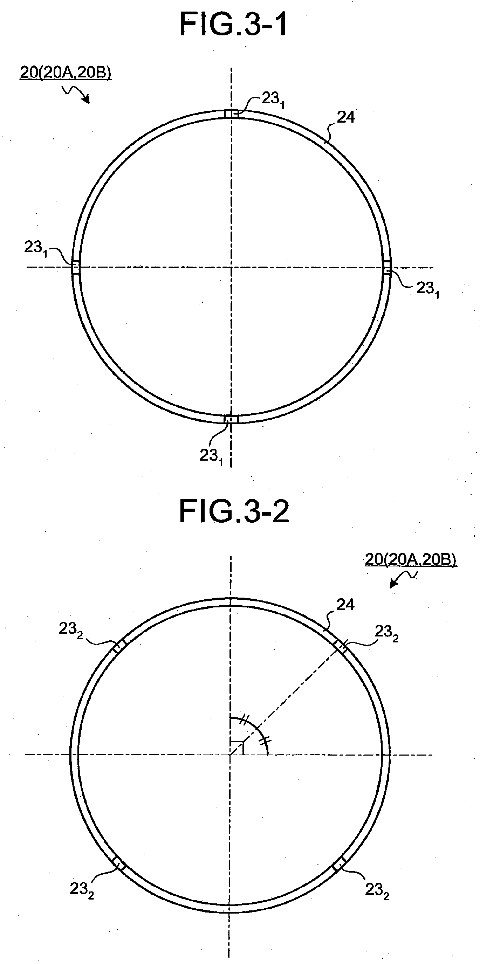

Fig. 1 is a cross sectional diagram showing a stirling engine as a piston apparatus and an exhaust heat recovery apparatus according to an embodiment. Fig. 2 is an explanatory diagram of a gas bearing which supports a piston. Figs. 3-1 and 3-2 are explanatory diagrams showing an arrangement example of air supply openings in a high-temperature-side piston and a low-temperature-side piston provided for the stirling engine according to the embodiment. First, the stirling engine as an exhaust heat recovery apparatus to which the piston apparatus according to the embodiment is applied will be described.

A stirling engine 1 as a piston apparatus and an exhaust heat recovery apparatus according to the embodiment is a so-called α-type in-line two-cylinder stirling engine. A high-temperature-side piston 20A as a first piston housed in a high-temperature-side cylinder 15A as a first cylinder and a low-temperature-side piston 20B as a second piston housed in a low-temperature-side cylinder 15B as a second cylinder are disposed in series.

In the high-temperature-side piston 20A, a high-temperature-side accumulation chamber 22A is provided. In the low-temperature-side piston 20B, a low-temperature-side accumulation chamber 22B is provided. As necessary, the high-temperature-side cylinder 15A and the low-temperature-side cylinder 15B will be called cylinders 15, the high-temperature-side piston 20A and the low-temperature-side piston 20B will be called pistons 20. The high-temperature-side accumulation chamber 22A and the low-temperature-side accumulation chamber 22B will be called accumulation chambers 22.

The high-temperature-side cylinder 15A and the low-temperature-side cylinder 15B are fixed and supported by a substrate 3 as a reference member. In the stirling engine 1 according to the embodiment, the substrate 3 is the position reference of the components of the stirling engine 1. With such a configuration, precision of relative positions of the components can be assured. As will be described later, in the stirling engine 1 according to the embodiment, a gas bearing GB is interposed between the high-temperature-side cylinder 15A and the high-temperature-side piston 20A and between the low-temperature-side cylinder 15B and the low-temperature-side piston 20B.

By directly or indirectly attaching the high-temperature-side cylinder 15A and the low-temperature-side cylinder 15B to the substrate 3 as the reference member, clearance between the piston 20 and the cylinder 15 can be held with precision, so that the function of the gas bearing GB can be fully displayed. Further, assembly of the stirling engine 1 is also facilitated. In the case of using the stirling engine 1 for exhaust gas recovery, there is also an advantage that the substrate 3 can be used as a reference at the time of attaching the stirling engine 1 to an exhaust passage of an internal combustion engine or the like.

The high-temperature-side cylinder 15A and the low-temperature-side cylinder 15B are connected to each other by a heat exchanger 2 constructed by a heater 2H, a regenerator 2R, and a cooler 2C. One end of the heater 2H is connected to the high-temperature-side cylinder 15A, and the other end is connected to the regenerator 2R. The heater 2H heats a working fluid. One end of the regenerator 2R is connected to the heater 2H, and the other end is connected to the cooler 2C. The working fluid flowing in from the heater 2H or the cooler 2C passes through the regenerator 2R. One end of the cooler 2C is connected to the regenerator 2R, and the other end is connected to the low-temperature-side cylinder 15B. The cooler 2C cools the working fluid. The working fluid passed through the heat exchanger 2 flows in the high-temperature-side cylinder 15A and the low-temperature-side cylinder 15B and flows out.

In a high-temperature-side operating space 14A in the high-temperature-side cylinder 15A, a low-temperature-side operating space 14B in the low-temperature-side cylinder 15B, and the heat exchanger 2, the working fluid (which is gas and, in the embodiment, is air) is sealed. Heat is supplied from the heater 2H to the working fluid, and is exhausted from the working fluid by the cooler 2C, thereby constructing a stirling cycle and driving the high-temperature-side piston 20A and the low-temperature-side piston 20B. For example, each of the heater 2H and the cooler 2C can be constructed by bundling a plurality of tubes made of a material having high heat conductivity and excellent heat resistance property. The regenerator 2R can be constructed by a porous heat accumulator. The configurations of the heater 2H, the cooler 2C, and the regenerator 2R are not limited to the example, but preferable configurations can be selected according to the thermal conditions of the exhaust heat object, the specifications of the stirling engine 1, and the like.

The high-temperature-side piston 20A and the low-temperature-side piston 20B are supported via the gas bearings GB in the high-temperature-side cylinder 15A and the low-temperature-side cylinder 15B, respectively. With the configuration, friction between the pistons 20 and the cylinders 15 is reduced without using a lubricant, and net thermal efficiency of the stirling engine 1 can be improved. By reducing the friction between the piston and the cylinder, for example, like in the case of recovering exhaust heat of the internal combustion engine, the stirling engine 1 can be operated and exhaust heat can be recovered also under the operating conditions of low heat source and low temperature difference.

The gas bearing GB according to the embodiment is a so-called static-pressure gas bearing. The gas bearing GB in the embodiment supports the piston 20 which reciprocates in the cylinder 15 (same in the following). That is, in the embodiment, the gas bearing has the function of reducing friction between a pair of sliding structures by a gas interposing between the structures (same in the following). To form the gas bearing GB, a gap "tc" (see Fig. 2) between the piston 20 and an inner face 15i of the cylinder 15 extends by a few µm to tens µm in the entire circumference of the piston 20. The cylinder 15 and the piston 20 can be made of, for example, a metal material.

In the embodiment, as shown in Fig. 2, the gas (working fluid) in the accumulation chamber 22 in the piston 20 flows out from first and second air supply ports 23₁ and 23₂ which are open in sides (piston sides) 24 of the piston 20, thereby forming the gas bearings GB between the cylinder 15 and the piston 20. The accumulation chamber 22 in the piston 20 is a space surrounded by at least the sides 24 of the piston 20 opposed to the cylinder 15 and partition walls 26 attached to the sides 24.

To the accumulation chamber 22, a gas supply pipe 17 is connected. To the accumulation chamber 22, a gas FL for forming the gas gearing GB is supplied from a gas bearing pump 16 as gas supply means for gas bearing via the gas supply pipe 17. The gas FL is the same gas as the operating fluid of the stirling engine 1 in the embodiment and is concretely air. In the following, the gas FL will be called the working fluid FL.

In the stirling engine 1 shown in Fig. 1, the gas bearing pump 16 is provided on the outside of a crankcase 4 of the stirling engine 1. By the gas bearing pump 16, the working fluid FL is supplied from a gas supply pipe 17A to the high-temperature-side accumulation chamber 22A in the high-temperature-side piston 20A and from a gas supply pipe 17B to a low-temperature-side accumulation chamber 22B in the low-temperature-side piston 20B. The working fluid FL supplied to the accumulation chamber 22 flows from the first and second air supply ports 23₁ and 23₂ to the space between the sides 24 of the piston 20 and the cylinder 15, thereby forming the gas bearing GB.

The reciprocating motion of the high-temperature-side piston 20A and the low-temperature-side piston 20B is transmitted to a crankshaft 10 by a high-temperature-side extension rod 12A and a high-temperature-side connecting rod 13A and by a low-temperature-side extension rod 12B and a low-temperature-side connecting rod 13B, and converted to rotational motion by the crankshaft 10. The crankshaft 10 rotates about a crankshaft rotation axis Xc as a center. The high-temperature-side extension rod 12A, the high-temperature-side connecting rod 13A, the low-temperature-side extension rod 12B, and the low-temperature-side connecting rod 13B are provided between the piston 20 and the crankshaft 10 and transmit the reciprocating motion of the piston 20 to the crankshaft 10.

The high-temperature-side piston 20A and the high-temperature-side extension rod 12A are coupled to each other via a piston-side joint mechanism 30P, and the low-temperature-side piston 20B and the low-temperature-side extension rod 12B are coupled to each other via the piston-side joint mechanism 30P. The high-temperature-side extension rod 12A and the high-temperature-side connecting rod 13A are coupled to each other via a crankshaft-side joint mechanism 30C, and the low-temperature-side extension rod 12B and the low-temperature-side connecting rod 13B are coupled to each other via the crankshaft-side joint mechanism 30C. The crankshaft-side joint mechanism 30C is disposed on the crankshaft 10 side nearer than the piston-side joint mechanism 30P.

In the case where the high-temperature-side extension rod 12A and the low-temperature-side extension rod 12B are not distinguished from each other, they will be called extension rods 12. In the case where the high-temperature-side connecting rod 13A and the low-temperature-side connecting rod 13B are not distinguished from each other, they will be called connecting rods 13. In the case where the piston-side joint mechanism 30P and the crankshaft-side joint mechanism 30C are not distinguished from each other, they will be called joint mechanisms 30.

As shown in Fig. 1, the crankshaft 10 is rotatably supported by a bearing 9 provided for the crankcase 4. The crankcase 4 is fixed to the substrate 3. At this time, the crankcase 4 is fixed to the substrate 3 independently of the high-temperature-side cylinder 15A and the low-temperature-side cylinder 15B, that is, so as not to be in contact with those cylinders. Consequently, the influence such as vibration of the crankshaft received by the high-temperature-side cylinder 15A and the low-temperature-side cylinder 15B and thermal expansion of the crankshaft 10 can be minimized, so that the function of the gas bearing GB is sufficiently assured.

As shown in Fig. 1, the components of the stirling engine 1 such as the high-temperature-side cylinder 15A, the high-temperature-side piston 20A, and the crankshaft 10 are housed in a casing 5. The inside of the casing 5 is pressurized by a pressurizing means 11. The working fluid (in the embodiment, gas i.e. air) in the high-temperature-side cylinder 15A, the low-temperature-side cylinder 15B, and the heat exchanger 2 is pressurized to obtain a larger output from the stirling engine 1. By the operation, even in the case where only a low-grade heat source such as exhaust heat recovery can be used, a larger output can be obtained from the stirling engine 1. An output of the stirling engine 1 increases almost proportional to the pressure of gas filled in the casing 5.

In the stirling engine 1 according to the embodiment, a sealed bearing 6 is attached to the casing 5, and an output shaft 7 is supported by the sealed bearing 6. The output shaft 7 and the crankshaft 10 are coupled to each other via a flexible coupling 8. Via the flexible coupling 8, an output of the crankshaft 10 is transmitted to the outside of the casing 5. In the embodiment, as the flexible coupling 8, an Oldham's coupling is used. The arrangement of the air supply ports of the piston 20 will now be described.

As shown in Figs. 3-1 and 3-2, in the high-temperature-side piston 20A according to the embodiment, four first air supply ports 23₁ and four second air supply ports 23₂, total eight air supply ports are provided. As shown in Fig. 3-1, the first air supply ports 23₁ are disposed at almost equal intervals (about 90 degrees) in the circumferential direction of the high-temperature-side piston 20A. As shown in Fig. 3-2, the second air supply ports 23₂ are disposed at almost equal intervals (about 90 degrees) in the circumferential direction of the high-temperature-side piston 20A so as to be deviated from the first air supply ports 23₁ by about 45 degrees. With such arrangement, bias in the gas bearing GB can be reduced. The number and arrangement of the air supply ports are not limited to the example.

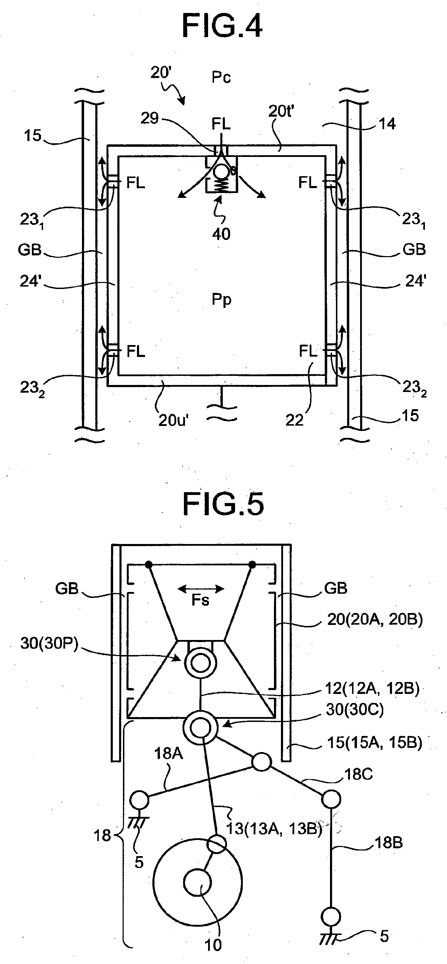

Fig. 4 is an explanatory diagram showing another example of a piston which can be applied to the stirling engine according to the embodiment. A piston 20' shown in Fig. 4 has therein the accumulation chamber 22. Specifically, the accumulation chamber 22 is a space surrounded by the outer envelope of the piston 20', that is, a top 20t', sides 24', and a bottom 20u'. In the top 20t' of the piston 20', a gas introduction passage 29 communicating with the accumulation chamber 22 is provided. The working fluid FL in an operating space 14 is introduced via the gas introduction passage 29 to the accumulation chamber 22 of the piston 20'.

As shown in Fig. 4, on the side of the accumulation chamber 22 of the gas introduction passage 29, a check valve 40 is provided as pressurization state holding means in order to check backflow of the working fluid FL introduced in the accumulation chamber 22. The check valve 40 is disposed in the accumulation chamber 22 to introduce the working fluid FL in the operating space 14 from the gas introduction passage 29 into the accumulation chamber 22 and prevent backflow of the working fluid FL in the accumulation chamber 22 to the operating space 14.

By the motion of the piston 20', pressure (operating space pressure) Pc of the working fluid FL existing in the operating space 14 in the cylinder 15 shown in Fig. 4 rises. When the pressure Pc overcomes the valve open pressure of the check valve 40, the check valve 40 opens. By the open, the working fluid FL in the operating space 14 passes through the gas introduction passage 29 and flows in the accumulation chamber 22. Valve open pressure Po of the check valve 40 is set to a predetermined pressure higher than pressure (accumulation chamber pressure) Pp in the accumulation chamber 22.

When the operating space pressure Pc decreases due to the movement of the piston 20' and becomes lower than the accumulation chamber pressure Pp, the check valve 40 closes. By the closure, the working fluid FL in the accumulation chamber 22 is prevented from flowing backward to the operating space 14. As described above, the check valve 40 has the pressurization state holding function of holding the pressurization state in the accumulation chamber 22 and also the working fluid introducing function of introducing the working fluid FL into the accumulation chamber 22. The working fluid FL introduced in the accumulation chamber 22 in the piston 20' flows out from the first air supply ports 23₁ and the second air supply ports 23₂ opened in the sides 24 of the piston 20'. In such a manner, the gas bearing GB is formed between the cylinder 15 and the piston 20'. Next, the support structure of the piston 20 in the stirling engine 1 according to the embodiment will be described.

Fig. 5 is an explanatory diagram showing the support structure of the piston of the stirling engine according to the embodiment. The stirling engine 1 according to the embodiment supports the piston 20 in the cylinder 15 via the gas bearing GB. Since the gas bearing GB has low capability (load capability) of withstanding force in the diameter direction (lateral direction, thrust direction) of the piston 20, it is preferable to set side force Fs of the piston 20 (force in the diameter direction of the piston 20) to substantially zero. It is therefore necessary to increase linear motion precision of the piston with respect to the center axis of the cylinder 15 (cylinder center axis). To realize it, in the embodiment, the pistons 20 (the high-temperature-side piston 20A and the low-temperature-side piston 20B) are supported by the approximate linear mechanism. In the embodiment, as the approximate linear mechanism, a grasshopper mechanism 18 shown in Fig. 5 is used.

The grasshopper mechanism 18 includes a first arm 18A whose one end is swingably attached to the casing 5 of the stirling engine 1, a second arm 18B whose one end is swingably attached to the casing 5 of the stirling engine 1, and a third arm 18C whose one end is swingably coupled to a coupling part between the extension rod 12 and the connecting rod 13 and whose other end is swingably coupled to the other end of the second arm 18B. The other end of the first arm 18A is swingably coupled between both ends of the third arm 18C. As described above, the coupling part between the extension rod 12 as a coupling member and the connecting rod 13 is supported by the grasshopper mechanism 18 as the approximate linear mechanism. As a result, the object to be coupled on the crankshaft side of the coupling member 12, that is, the part coupled to the connecting rod 13 is supported by the approximate linear mechanism. The extension rod 12 is swingably coupled to the piston 20, so that the piston 20 is supported by the grasshopper mechanism 18 as the approximate linear mechanism via the extension rod 12.

With the grasshopper mechanism 18 constructed as described above, the piston 20 can be made reciprocate almost linearly. As a result, the side force Fs of the piston 20 becomes almost zero, so that the piston 20 can be sufficiently supported even by the gas bearing GB having low load capability. The approximate linear mechanism supporting the piston 20 is not limited to the grasshopper mechanism 18 but may be a Watt linkage or the like.

The grasshopper mechanism 18 has an advantage such that since the dimensions of the mechanism necessary to obtain linear motion precision are smaller than those of the other linear approximation mechanisms, so that the stirling engine 1 becomes compact as a whole. In particular, in the case of using the stirling engine 1 according to the embodiment for recovery of exhaust heat of an internal combustion engine to be mounted in a vehicle and disposing the stirling engine 1 in a limited space in such a manner that the heat exchanger 2 is disposed in the passage of exhaust gas of the internal combustion engine, when the stirling engine 1 as a whole is compact, the flexibility of disposition improves. In addition, the mass of the grasshopper mechanism 18 necessary to obtain linear motion precision is smaller than that of any of the other mechanisms, so that the grasshopper mechanism 18 is also advantageous from the viewpoint of improving thermal efficiency. Further, since the configuration of the grasshopper mechanism 18 is relatively simple, there are also advantages such that manufacturing and assembling are easy, and its manufacturing cost is also low.

In the embodiment, the piston 20 is coupled to the crankshaft 10 via the extension rod 12 and the connecting rod 13. Between the piston 20 and the extension rod 12 and between the extension rod 12 and the connecting rod 13, the joint mechanism 30 is provided, respectively. The extension rod 12 is a coupling member coupled to the piston 20 and provided between the piston 20 and the crankshaft 10. In the example, the object to be coupled on the side of the crankshaft 10 of the extension rod 12 as the coupling member coupled to the piston 20 is the connecting rod 13.

In such a manner, the piston 20 is coupled to the connecting rod 13 via the extension rod 12 and the joint mechanisms (the first and second joint mechanisms) 30 disposed at the ends of the extension rod 12. By such a coupling structure, the reciprocating motion of the piston 20 is transmitted to the crankshaft 10 and converted to rotational motion by the crankshaft 10.

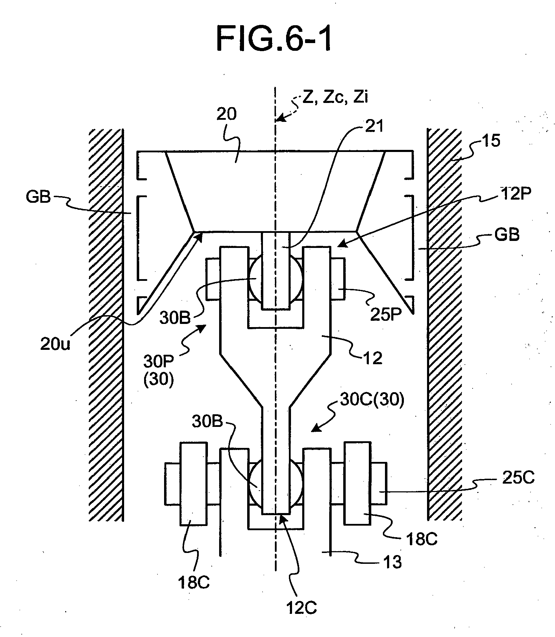

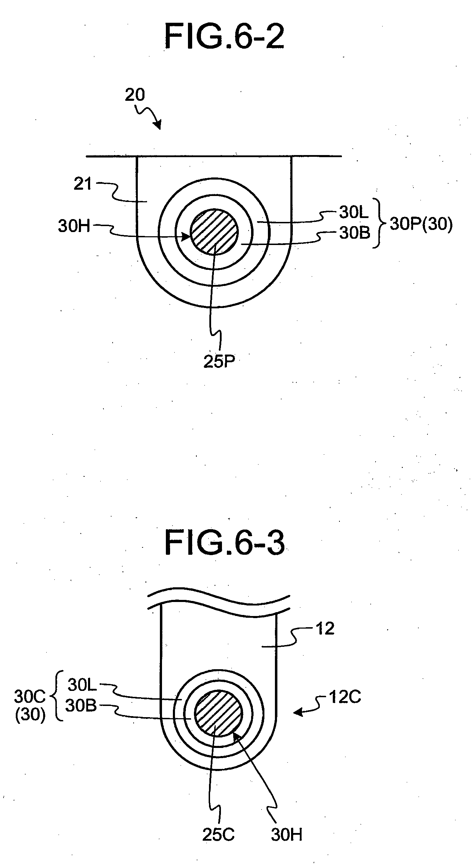

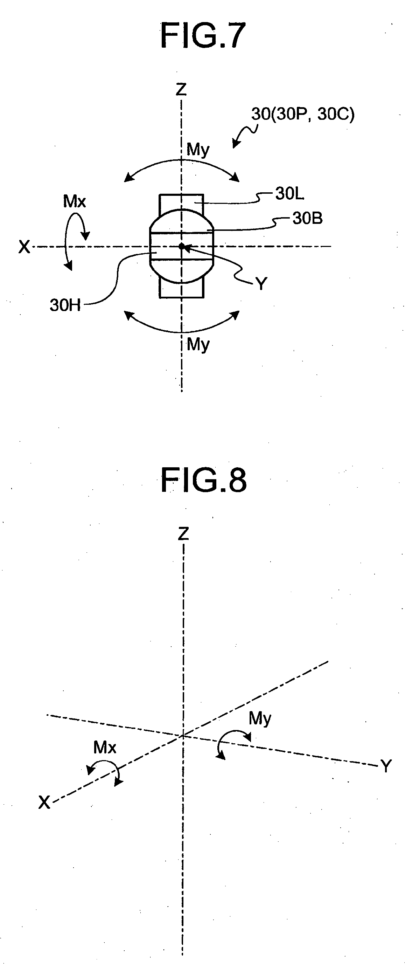

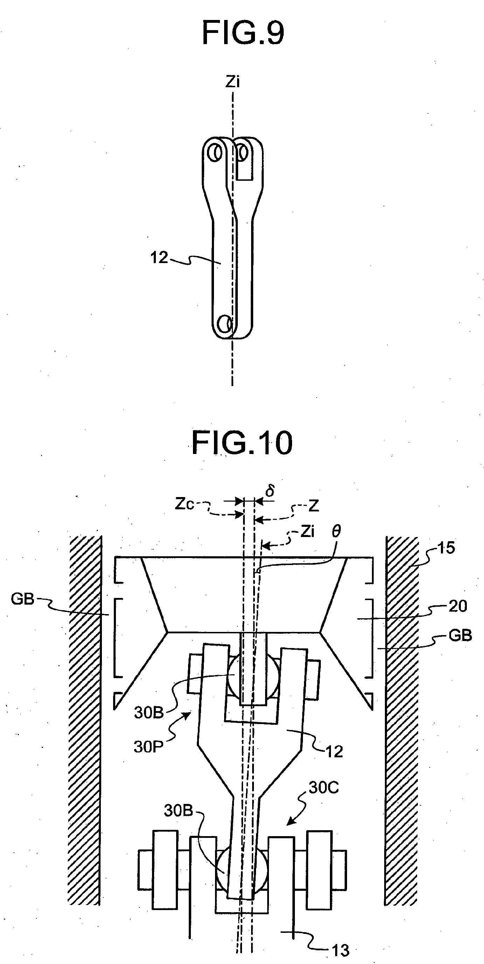

Figs. 6-1 to 6-3 are enlarged diagrams showing the coupling structure of the piston according to the embodiment. Fig. 7 is a cross sectional diagram showing the configuration of a joint as a component of the piston coupling structure according to the embodiment. Fig. 8 is a schematic diagram showing coordinates for explaining movement of the joint illustrated in Fig. 7. Fig. 9 is an explanatory diagram of an extension road as a component of the piston coupling structure according to the embodiment. Fig. 10 is a conceptual diagram for explaining that a deviation between the center axis of a connecting rod and that of a cylinder can be permitted by the piston coupling structure according to the embodiment.

As shown in Fig. 6-1, in the piston 20, a coupling part 21 is provided at a bottom 20u of the piston 20, that is, on the side opposed to the extension rod 12 of the piston 20 (the side opposed to the crankshaft 10 shown in Figs. 1 and 5). The coupling part 21 and a piston-side end 12P (first end) of the extension rod 12 are coupled to each other via the piston-side joint mechanism 30P as a first joint mechanism. A connecting-rod-side end (second end) 12C of the extension rod 12 and the connecting rod 13 are coupled to each other via the crankshaft-side joint mechanism 30C as a second joint mechanism.

In the embodiment, the piston-side joint mechanism 30P and the crankshaft-side joint mechanism 30C are spherical sliding bearings. The spherical sliding bearing is a sliding bearing having no rolling element unlike a rolling bearing and in which the outer and inner rings come into spherical contact. The sliding bearing is used mainly for oscillating motion and tilting motion and whose sliding plane is spherical. As shown in Fig. 7, the joint mechanism 30 (the piston-side joint mechanism 30P and the crankshaft-side joint mechanism 30C) has an inner ring 30B having a spherical surface as a sliding surface, and an outer ring 30L which comes in contact with the sliding surface and rotatably supports the inner ring 30B. A shaft hole 30H penetrates the inner ring 30B. Via the shaft hole 30H, the joint mechanism 30 is attached to the object to be attached.

The coordinate system shown in Fig. 8 corresponds to that shown in Fig. 7. The Z axis in Figs. 7 and 8 corresponds to the center axis of the cylinder 15 (cylinder center axis) shown in Figs. 1 and 6, and the X axis is an axis parallel to a crankshaft rotation axis Xc shown in Fig. 1. The X axis is orthogonal to the Z axis. That is, the Z axis (cylinder center axis) is orthogonal to the crankshaft rotation axis Xc and the axis parallel to the crankshaft rotation axis Xc.

The Y axis is an axis orthogonal to the Z axis and the X axis. That is, the Y axis is orthogonal to the Z axis (cylinder center axis), the crankshaft rotation axis Xc, and an axis parallel to the crankshaft rotation axis Xc. In the embodiment, the joint mechanism 30 is constructed by a spherical sliding bearing, so that it can swing at least about the X axis (the direction of arrow Mx in Figs. 7 and 8) and about the Y axis (the direction of the arrow My in Figs. 7 and 8). The joint mechanism 30 can also swing about the Z axis.

As shown in Fig. 6-2, the outer ring 30L of the piston-side joint mechanism 30P is attached to the coupling part 21 of the piston 20. In the shaft hole 30H formed in the inner ring 30B of the piston-side joint mechanism 30P, a piston-side mounting pin 25P to be fixed to the piston-side end 12P of the extension rod 12 is inserted. By the operation, the coupling part 21 of the piston 20 and the extension rod 12 are coupled to each other via the piston-side joint mechanism 30P.

As shown in Fig. 6-3, the outer ring 30L of the crankshaft-side joint mechanism 30C is attached to the connecting-rod-side end 12C of the extension rod 12. In the shaft hole 30H formed in the inner ring 30B of the crankshaft-side joint mechanism 30C, a connecting-rod-side mounting pin 25C to be fixed to the end of the connecting rod 13 in the part coupled to the extension rod 12 is inserted. By the operation, the extension rod 12 and the connecting rod 13 are coupled to each other via the crankshaft-side joint mechanism 30C.

The state shown in Fig. 6-1 is a state where the cylinder center axis Z, the center axis Zc of the connecting rod 13 (the center axis in the longitudinal direction of the connecting rod 13), and the center axis Zi of the extension rod 12 (the center axis in the longitudinal direction of the extension rod 12, see Fig. 9) coincide with each other. When the connecting rod 13 deviates in a direction parallel to the crankshaft rotation axis Xc of the crankshaft 10 shown in Fig. 1 due to assembly tolerance or the like, the piston 20 reciprocates in a state where the center axis Zc of the connecting rod 13 and the cylinder center axis Z are deviated from each other. Accordingly, the piston 20 reciprocates in a state where the center axis of the piston 20 and the cylinder center axis Zc are deviated from each other.

In the stirling engine 1 according to the embodiment, the piston 20 is supported in the cylinder 15 via the gas bearing GB. Consequently, when the center axis of the piston 20 and the cylinder center axis Zc are deviated from each other, bias occurs in the clearance between the piston 20 and the cylinder 15. As a result, bias occurs also in the load capability of the gas bearing GB shown in Fig. 2, and the load capability of the gas bearing GB cannot be effectively used.

In the embodiment, two joint mechanisms 30 which can swing at least about the X axis as a axis parallel to the crankshaft rotation axis Xc and the Y axis orthogonal to the X axis and the cylinder center axis Z are disposed between the piston 20 and the connecting rod 13. That is, the joint mechanisms 30 are provided at both ends of the extension rod 12 coupling the piston 20 and the connecting rod 13.

With such a configuration, as shown in Fig. 10, in the case where the connecting rod 13 deviates in a direction parallel to the crankshaft rotation axis Xc, even in a state where the extension rod 12 as the coupling member tilts toward the crankshaft rotation axis Xc with respect to the cylinder center axis Z, the piston 20 can reciprocate. Consequently, the piston 20 can reciprocate in a state where a deviation δ between the center axis Zc of the connecting rod 13 and the cylinder center axis Z is maintained. As a result, even in the case where the connecting rod 13 deviates in a direction parallel to the crankshaft rotation axis Xc due to tolerance or the like, the piston 20 reciprocates in a state where the center axis of the piston 20 and the cylinder center axis Zc coincide with each other.

That is, in the case where the connecting rod 13 deviates in a direction parallel to the crankshaft rotation axis Xc, the inner ring 30B and the outer ring 30L as components of the piston-side joint mechanism 30P and the crankshaft-side joint mechanism 30C provided at both ends of the extension rod 12 swing relative to each other about the Y axis orthogonal to the cylinder center axis Z and the crankshaft rotation axis Xc. Consequently, even in the case where a deviation occurs between the center axis of the piston 20 and the cylinder center axis Z, motion of the piston 20 in the direction parallel to the crankshaft rotation axis Xc is permitted. Therefore, the piston 20 reciprocates in a state where the cylinder center axis Z and the center axis of the piston 20 coincide with each other, so that the posture of the piston 20 is stabilized.

That is, the clearance between the piston 20 and the cylinder 15 can be maintained constant by the static pressure of the gas bearing GB in the circumference direction of the piston 20 and the cylinder 15, so that the load bearing capability of the gas bearing GB can be effectively used, and the posture of the piston 20 is stabilized. Even in the case where slight vibration occurs in the grasshopper mechanism 18 supporting the piston 20, transmission of vibration to the piston 20 is suppressed by the piston-side joint mechanism 30P and the crankshaft-side joint mechanism 30C. Thus, the piston 20 can maintain the stable posture.

In this case, although the center axis Zi of the extension rod 12 tilts from the cylinder center axis Z (by tilt angle θ), parallelism of the center axis Zc of the connecting rod 13, the cylinder center axis Z, and the center axis of the piston 20 is maintained. That is, although the piston 20 can reciprocate in a state where the center axis Zi of the extension rod 12 and the cylinder center axis Z tilt, parallelism of the center axis Zc of the connecting rod 13, the cylinder center axis Z, and the center axis of the piston 20 is maintained.

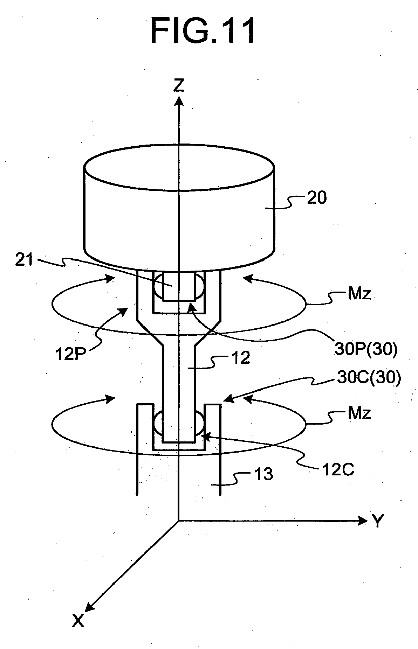

Fig. 11 is a schematic diagram for explaining rotation of the piston about the cylinder center axis. As shown in Fig. 11, in the embodiment, the piston 20 is coupled to the connecting rod 13 via the extension rod 12 having, on its both ends, the piston-side joint mechanism 30P and the crankshaft-side joint mechanism 30C. As described above, the piston-side joint mechanism 30P and the crankshaft-side joint mechanism 30C can swing about the X axis, Y axis, and Z axis shown in Figs. 7 and 8. Therefore, as illustrated in Fig. 11, the piston 20 can swing also about the cylinder center axis Z (the direction shown by the arrow Mz in Fig. 11).

When the piston 20 swings about the cylinder center axis Z, the coupling part 21 of the piston 20 and the piston-side end 12P of the extension rod 12 may come into contact with each other, or the connecting-rod-side end 12C of the extension rod 12 and the connecting rod 13 may come into contact with each other. As a result, abrasion occurs in the contact parts, or noise occurs from those parts. In a modification of the embodiment, by suppressing swing of the piston 20 about the cylinder center axis Z, occurrence of abrasion and noise between the coupling part 21 of the piston 20 and the piston-side end 12P of the extension rod 12 is suppressed.

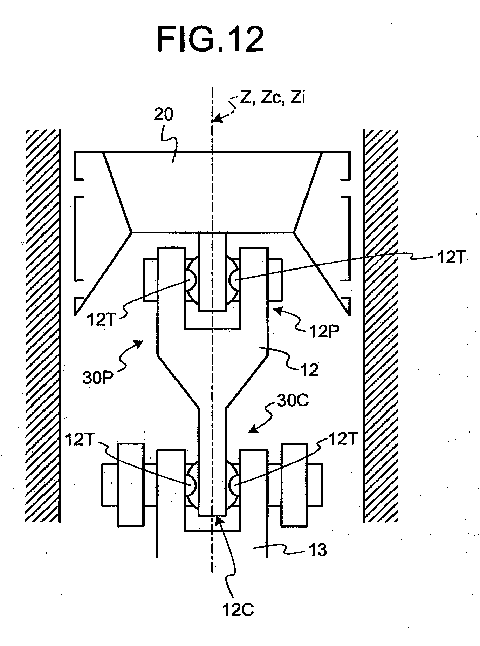

Figs. 12 to 14 are enlarged diagrams showing the coupling structure of the piston according to modifications of the embodiment. In a coupling structure of the piston shown in Fig. 12, a protruding portion 12T as rotation suppressing means is formed between the coupling part 21 of the piston 20 and the extension rod 12 (more concretely, the piston-side end 12P of the extension rod 12). Also between the connecting-rod-side end 12C of the extension rod 12 and the connecting rod 13, the protruding portion 12T is formed as rotation suppressing means. The protruding portion 12T as rotation suppressing means is preferably provided at least between the coupling part 21 of the piston 20 and the extension rod 12 and between the extension rod 12 and the connecting rod 13.

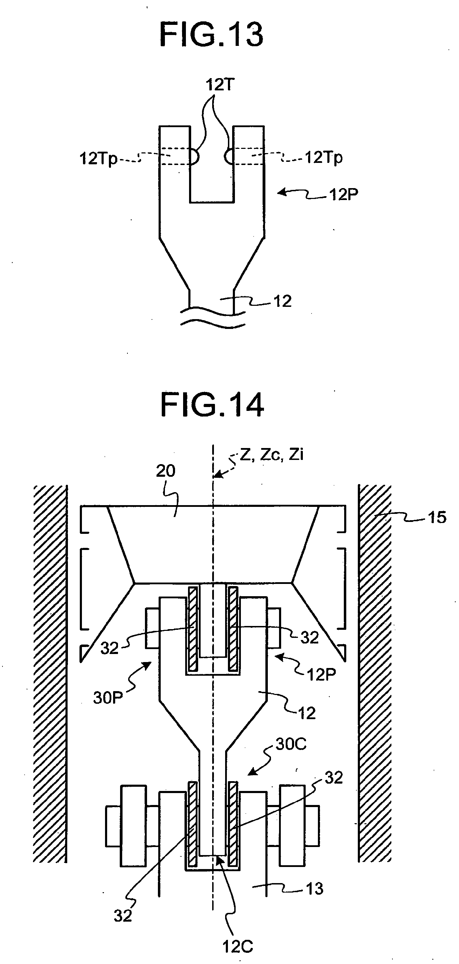

On the piston 20 side, the protruding portion 12T may be formed in the extension rod 12 or the coupling part 21 of the piston 20. On the connecting rod 13 side, the protruding portion 12T may be formed in the extension rod 12 or the connecting rod 13. The protruding portion 12T may be formed integrally with the extension rod 12, the connecting rod 13, and the like. Alternatively, for example, as shown in Fig. 13, the protruding portion 12T may be formed by driving a rotation suppression pin 12Tp from the outside of the piston-side end 12P of the extension rod 12 so as to be projected to the inside.

With such a configuration, swing of the piston 20 about the cylinder center axis Z is suppressed. It can suppress contact between the coupling part 21 of the piston 20 and the piston-side end 12P of the extension rod 12 and contact between the connecting-rod-side end 12C of the extension rod 12 and the connecting rod 13. As a result, abrasion occurring in those parts and noise occurring from the parts can be suppressed. In particular, since noise of the stirling engine 1 shown in Fig. 1 is small, when noise caused by contact between the coupling part 21 of the piston 20 and the piston-side end 12P of the extension rod 12 or the like is suppressed, it is effective to reduce noise of the stirling engine 1 as a whole.

In the coupling structure of the piston shown in Fig. 14, a buffer member 32 as rotation suppressing means is provided between the coupling part 21 of the piston 20 and the extension rod 12 (more concretely, the piston-side end 12P of the extension rod 12). The buffer member 32 as rotation suppressing means is provided also between the connecting-rod-side end 12C of the extension rod 12 and the connecting rod 13. The buffer member 32 is preferably an elastic member. For example, resin, sponge, urethane, felt, or the like can be used.

With such a configuration, swing of the piston 20 about the cylinder center axis Z is suppressed. It can suppress contact between the coupling part 21 of the piston 20 and the piston-side end 12P of the extension rod 12 and contact between the connecting-rod-side end 12C of the extension rod 12 and the connecting rod 13. Even when contact occurs in the two members in those parts, impact which occurs at the time of contact can be buffered by the buffer member 32. As a result, abrasion which occurs in the parts and noise occurring from the parts can be suppressed more effectively. In addition, the coupling part 21 of the piston 20 and the connecting-rod-side end 12C of the extension rod 12 are sandwiched by the buffer member 32, it is also effective to the posture stability of the piston 20.

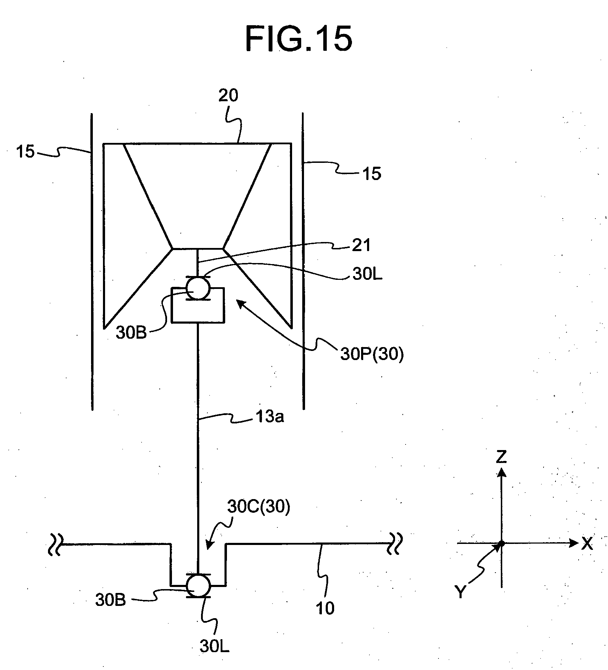

Fig. 15 is a schematic diagram showing the coupling structure of the piston according to a modification of the embodiment. In the piston coupling structure, the piston 20 and the crankshaft 10 are directly coupled to each other by a connecting rod 13a. In this case, the connecting rod 13a is a coupling member which is provided between the piston 20 and the crankshaft 10 and is coupled to the piston 20. In this example, the object to be coupled on the side of the crankshaft 10 of the extension rod 12 as the coupling member to be coupled to the piston 20 is the crankshaft 10.

At the piston-side end (first end) of the connecting rod 13a, the piston-side joint mechanism 30P is provided as a first joint structure. At the crankshaft-side end (second end) of the connecting rod 13a, the crankshaft-side joint mechanism 30C is provided as a second joint structure. The inner ring 30B of the piston-side joint mechanism 30P is attached to the connecting rod 13a, and the outer ring 30L is attached to the coupling part 21 of the piston 20. The inner ring 30B of the crankshaft-side joint mechanism 30C is attached to the crankshaft 10, and the outer ring 30L is attached to the connecting rod 13a. With such a configuration, the connecting rod 13a is attached to the piston 20 via the piston-side joint mechanism 30P, and attached to the crankshaft 10 via the crankshaft-side joint mechanism 30C.

Also in the piston supporting structure, two joint mechanisms 30 which can swing at least about the X axis as an axis parallel to the rotation axis of the crankshaft 10 and the Y axis orthogonal to the X axis and the cylinder center axis Z are disposed between the piston 20 and the connecting rod 13a. That is, the joint mechanisms 30 are provided at both ends of the connecting rod 13a coupling the piston 20 and the crankshaft 10. With such a configuration, in the case where the connecting rod 13a deviates in a direction parallel to the rotation axis of the crankshaft, in a state where the connecting rod 13a tilts toward a direction parallel to the rotation axis of the crankshaft 10 with respect to the cylinder center axis Z, the piston 20 can reciprocate in the cylinder 15. Consequently, even in the case where the connecting rod 13a deviates in a direction parallel to the rotation axis of the crankshaft 10 due to tolerance or the like, the piston 20 reciprocates in a state where the center axis of the piston 20 and the cylinder center axis Zc coincide with each other.

That is, in the case where the connecting rod 13a deviates in a direction parallel to the rotation axis of the crankshaft 10, the inner ring 30B and the outer ring 30L as components of the piston-side joint mechanism 30P and the crankshaft-side joint mechanism 30C provided at both ends of the connecting rod 13a swing relative to each other about the Y axis orthogonal to the cylinder center axis Z and the rotation axis of the crankshaft 10. Consequently, even in the case where a deviation occurs between the center axis of the piston 20 and the cylinder center axis Z, motion of the piston 20 in the direction to the rotation axis of the crankshaft 10 is permitted.

Therefore, the piston 20 itself can maintain the clearance between the piston 20 and the cylinder 15 by statistic pressure of the gas bearing GB, so that the posture of the piston 20 is stabilized. That is, since the piston 20 reciprocates in a state where the cylinder center axis Z and the center axis of the piston 20 coincide with each other, the load bearing capability of the gas bearing GB can be effectively used.

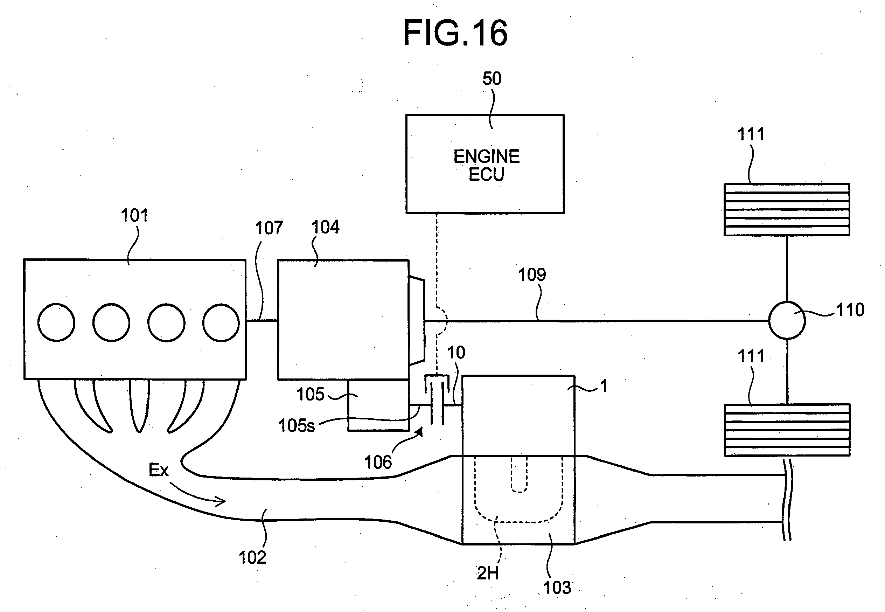

Fig. 16 is a schematic diagram showing a configuration example in the case where the stirling engine according to the embodiment is used for recovery of exhaust heat of an internal combustion engine. In the embodiment, an output of the stirling engine 1 is supplied to a internal combustion engine transmission 104 via a stirling engine transmission 105 and combined with an output of an internal combustion engine 101, and the resultant of the outputs is taken out.

In the embodiment, the internal combustion engine 101 is mounted on, for example, a vehicle such as a car, track, or the like and serves as a power source of the vehicle. The internal combustion engine 101 generates an output as a main power source during travel of the vehicle. On the other hand, the stirling engine 1 can generate the minimum output only after the temperature of exhaust gas Ex increases to temperature of a certain degree. Therefore, in the embodiment, after the temperature of the exhaust gas Ex from the internal combustion engine 101 exceeds a predetermined temperature, the stirling engine 1 recovers heat energy from the exhaust gas Ex of the internal combustion engine 101 to generate output and drives the vehicle with the internal combustion engine 101. In such a manner, the stirling engine 1 serves as a secondary power source of the vehicle.

The heater 2H of the stirling engine 1 is disposed in an exhaust passage 102 in the internal combustion engine 101. In the exhaust passage 102, the regenerator 2R of the stirling engine 1 shown in Fig. 1 may be disposed. The heater 2H of the stirling engine 1 is disposed in a hollow heater case 103 provided for the exhaust passage 102.

In the embodiment, the thermal energy of the exhaust gas Ex recovered by using the stirling engine 1 is converted to motion energy in the stirling engine 1. A clutch 106 as power intermitting means is attached to the crankshaft 10 as the output shaft of the stirling engine 1. The output of the stirling engine 1 is transmitted to the stirling engine transmission 105 via the clutch 106.

An output of the internal combustion engine 101 is input to the internal combustion engine transmission 104 via an output shaft 107 of the internal combustion engine 101. The internal combustion engine transmission 104 combines the output of the internal combustion engine 101 and the output of the stirling engine 1 output from the stirling engine transmission 105 and outputs the resultant to a transmission output shaft 109 to drive drive wheels 111 via a differential gear 110.

Here, the clutch 106 as power intermitting means is provided between the internal combustion engine transmission 104 and the stirling engine 1. In the embodiment, the clutch 106 is provided between an input shaft 105s of the stirling engine transmission 105 and the crankshaft 10 of the stirling engine 1. The clutch 106 realizes intermittent mechanical connection between the crankshaft 10 of the stirling engine 1 and the input shaft 105s of the stirling engine transmission 105 by engagement/disengagement. The clutch 106 is controlled by an engine ECU 50.

The stirling engine 1 recovers the thermal energy of the exhaust gas Ex from the internal combustion engine 101. Consequently, when the temperature of the exhaust gas Ex at the time of cold start or the like of the internal combustion engine 101, the stirling engine 1 cannot recover the thermal energy from the exhaust gas Ex and cannot generate output. Due to this, until the stirling engine 1 becomes able to generate output, the clutch 106 is disengaged so that the stirling engine 1 and the internal combustion engine 101 are disconnected from each other to thereby suppress energy loss caused when the stirling engine 1 is driven by the internal combustion engine 101.

When the clutch 106 is engaged, the crankshaft 10 of the stirling engine 1 and the output shaft 107 of the internal combustion engine 101 are directly coupled to each other via the stirling engine transmission 105 and the internal combustion engine transmission 104. As a result, the output generated by the stirling engine 1 and the output generated by the internal combustion engine 101 are combined by the internal combustion engine transmission 104, and the resultant is taken from the transmission output shaft 109. On the other hand, when the clutch 106 is disengaged, the output shaft 107 of the internal combustion engine 101 is disconnected from the crankshaft 10 of the stirling engine 1 and rotates.

The piston of the stirling engine 1 of the embodiment shown in Fig. 16 can assure stable operation by the above-described configuration. Even in the case where the stirling engine 1 mounted on a vehicle is subject to vibration, since the posture of the piston is stable, clearance between the piston and the cylinder is maintained constant, and the load bearing capability of the gas bearing can be sufficiently displayed. Since rotation suppressing means that suppresses rotation of the piston about the cylinder center axis is provided between the coupling part of the piston and the extension rod, occurrence of noise can be suppressed. With the configuration, quietness of the stirling engine 1 can be assured. In addition, by the rotation suppressing means, contact between the coupling part of the piston and the extension rod and the like is suppressed, so that abrasion of them can be suppressed. Thus, deterioration in durability of the stirling engine 1 can be suppressed.

As described above, in the embodiment, even in a state where the coupling member coupled to the piston which reciprocates in the cylinder and provided between the piston and crankshaft tilts toward a direction parallel to a rotation axis of the crankshaft from a center axis of the cylinder, the piston can reciprocate in the cylinder. Therefore, a deviation between the center axis of the piston in a direction parallel to the rotation axis of the crankshaft and the cylinder center axis caused by tolerance or the like is absorbed. In a state where the center axis of the piston and the cylinder center axis are made coincide with each other, the piston reciprocates. As a result, the load disapproval capability as the function of the gas bearing interposing between the piston and the cylinder can be reliably displayed, so that a piston engine assuming that the piston and the cylinder are not in contact with each other can also stably operate.

For example, in the case of using a ball joint for a coupling part between the piston and the coupling member and a coupling part between the coupling member and the connecting rod, a shaft having a center axis matching the center of a ball has to be newly provided at both ends of a socket of the ball joint, so that the structure becomes complicated. Accordingly, the coupling structure of the piston becomes larger and complicated, sliding parts increase, and friction also increases. In the embodiment, a spherical sliding bearing is used as a joint structure which can swing about at least two axes. As the first and second joint mechanisms, spherical sliding bearings are provided at both ends of the coupling member provided between the piston and the crankshaft. With the configuration, the piston and the connecting rod can be coupled by one member and two joint mechanisms. As a result, the very flexible coupling structure between a piston and a crankshaft can be constructed easily and compactly.

### INDUSTRIAL APPLICABILITY

As described above, the piston engine according to the present invention is useful to a piston engine using no piston ring, and is particularly suitable for a piston engine in which a gas bearing is interposed between a piston and a cylinder.

## Claims

1. A piston engine (1) comprising:
a piston (20) that reciprocates in a cylinder (15);
a gas bearing (GB) that supports the piston (20) in the cylinder (15) by gas interposing between the piston (20) and the cylinder (15); and
a crankshaft (10) that converts reciprocating motion of the piston (20) to rotational motion, wherein
even in a state where a coupling member (12) coupled to the piston (20) and provided between the piston (20) and the crankshaft (10) tilts at least toward a direction parallel to a rotation axis of the crankshaft (10) from a center axis of the cylinder (15), the coupling member (12), the piston (20), and an object to be coupled on a side of the crankshaft (10) are coupled so that the piston (20) can reciprocate in the cylinder (15),
a part of the coupling member (12) coupled to the object to be coupled on the side of the crankshaft (10) is supported by an approximate linear mechanism,
a first joint mechanism (30P) and a second joint mechanism (30C) are further provided at ends of the coupling member (12),
the piston (20) and the coupling member (12) to be coupled to the piston (20) are coupled via the first joint mechanism (30P),
the coupling member (12) and the object to be coupled on the side of the crankshaft (10) are coupled via the second joint mechanism (30C), and
the first joint mechanism (30P) and the second joint mechanism (30C) can swing at least about an axis parallel to the rotation axis of the crankshaft (10) and about an axis orthogonal to the rotation axis of the crankshaft (10) and the center axis of the cylinder (15).

2. The piston engine (1) according to claim 1, further comprising:
a rotation suppressing means (12T) that suppresses at least one of rotation about a center axis of the cylinder (15) between the piston (20) and the coupling member (12), and rotation about a center axis of the cylinder (15) between the connecting rod and the coupling member (12).

3. The piston engine (1) according to claim 2, wherein
the rotation suppressing means is a buffer member (32) that buffers an impact at a time when the coupling member (12) comes into contact with the object to be coupled.

## Patentansprüche

1. Kolbenmotor (1) mit:
einem Kolben (20), der sich in einem Zylinder (15) hin- und herbewegt;
einem Gaslager (GB), das den Kolben (20) in dem Zylinder (15) durch Gas abstützt, das zwischen dem Kolben (20) und dem Zylinder (15) eingefügt ist; und
einer Kurbelwelle (10), die die Hin- und Herbewegung des Kolbens (20) in eine Drehbewegung umwandelt, wobei
auch in einem Zustand, in dem ein Kopplungsbauteil (12), das mit dem Kolben (20) gekoppelt und zwischen dem Kolben (20) und der Kurbelwelle (10) vorgesehen ist, von einer Mittelachse des Zylinders (15) mindestens in Richtung einer zu einer Drehachse der Kurbelwelle (10) parallelen Richtung kippt, das Kopplungsbauteil (12), der Kolben (20), und ein kurbelwellenseitig zu koppelndes Objekt gekoppelt sind, so dass sich der Kolben (20) in dem Zylinder hin- und herbewegen kann,
ein Abschnitt des Kopplungsbauteils (12), der an das kurbelwellenseitig zu koppelnde Objekt gekoppelt ist, durch einen annähernd linearen Mechanismus gestützt ist,
ein erster Gelenkmechanismus (30P) und ein zweiter Gelenkmechanismus (30C) ferner an Enden des Kopplungsbauteils (12) vorgesehen sind,
der Kolben (20) und das mit dem Kolben (20) zu koppelnde Kopplungsbauteil (12) mittels des ersten Gelenkmechanismus (30P) gekoppelt sind,
das Kopplungsbauteil (12) und das kurbelwellenseitig zu koppelnde Objekt mittels des zweiten Gelenkmechanismus (30C) gekoppelt sind, und
der erste Gelenkmechanismus (30P) und der zweite Gelenkmechanismus (30C) mindestens um eine zu der Drehachse der Kurbelwelle (10) parallele Achse und um eine zu der Drehachse der Kurbelwelle (10) und der Mittelachse des Zylinders (15) rechtwinklige Achse schwingen können.

2. Kolbenmotor (1) nach Anspruch 1, ferner mit:
einer Rotationsunterdrückungseinrichtung (12T), die mindestens eines von einer Rotation um eine Mittelachse des Zylinders (15) zwischen dem Kolben (20) und dem Kopplungsbauteil (12), und einer Rotation um eine Mittelachse des Zylinders (15) zwischen der Verbindungsstange und dem Kopplungsbauteil (12) unterdrückt.

3. Kolbenmotor (1) nach Anspruch 2, wobei
die Rotationsunterdrückungseinrichtung ein Dämpferbauteil (32) ist, das einen Aufprall zu einem Zeitpunkt dämpft, wenn das Kopplungsbauteil (12) in Kontakt mit dem zu koppelnden Objekt kommt.

## Revendications

1. Moteur à piston (1) comprenant :
un piston (20) qui effectue un mouvement de va-et-vient dans un cylindre (15) ;
un palier à gaz (GB) qui supporte le piston (20) dans le cylindre (15) par interposition de gaz entre le piston (20) et le cylindre (15) ; et
un vilebrequin (10) qui convertit un mouvement de va-et-vient du piston (20) en un mouvement de rotation, dans lequel
même dans un état où un élément de couplage (12) couplé au piston (20) et prévu entre le piston (20) et le vilebrequin (10) s'incline au moins vers une direction parallèle à un axe de rotation du vilebrequin (10) à partir d'un axe central du cylindre (15), l'élément de couplage (12), le piston (20), et un objet à coupler sur un côté du vilebrequin (10) sont couplés de sorte que le piston (20) puisse effectuer un mouvement de va-et-vient dans le cylindre (15),
une partie de l'élément de couplage (12) couplé à l'objet à coupler sur le côté du vilebrequin (10) est supportée par un mécanisme linéaire approché,
un premier mécanisme d'articulation (30P) et un deuxième mécanisme d'articulation (30C) sont en outre prévus au niveau des extrémités de l'élément de couplage (12),
le piston (20) et l'élément de couplage (12) à coupler au piston (20) sont couplés par l'intermédiaire du premier mécanisme d'articulation (30P),
l'élément de couplage (12) et l'objet à coupler sur le côté du vilebrequin (10) sont couplés par l'intermédiaire du deuxième mécanisme d'articulation (30C), et
le premier mécanisme d'articulation (30P) et le deuxième mécanisme d'articulation (30C) peuvent pivoter au moins autour d'un axe parallèle à l'axe de rotation du vilebrequin (10) et autour d'un axe orthogonal à l'axe de rotation du vilebrequin (10) et à l'axe central du cylindre (15).

2. Moteur à piston (1) selon la revendication 1, comprenant en outre :
un moyen de suppression de rotation (12T) qui supprime au moins l'une de la rotation autour d'un axe central du cylindre (15) entre le piston (20) et l'élément de couplage (12), et de la rotation autour d'un axe central du cylindre (15) entre la bielle et l'élément de couplage (12).

3. Moteur à piston (1) selon la revendication 2, dans lequel
le moyen de suppression de rotation est un élément amortisseur (32) qui amortit un choc à un moment où l'élément de couplage (12) entre en contact avec l'objet à coupler.
